# EUROPÄISCHE PATENTSCHRIFT

(11) **EP 1 280 373 B1**
(45) Veröffentlichungstag und Bekanntmachung des Hinweises auf die Patenterteilung: **03.11.2004**
(21) Anmeldenummer: 01440232.5
(22) Anmeldetag: 23.07.2001
(51) Int. Cl.: H04Q 11/04, H04Q 11/00

(54) **Netzelement für Signale des Optical Transport Networks (OTN)**
Networkelement for optical transport network signals
Elément de réseau pour des signaux du réseau de transport optique

(43) Veröffentlichungstag der Anmeldung: 29.01.2003
(73) Patentinhaber: ALCATEL, 75008 Paris (FR)
(72) Erfinder: Wolf, Micheal, 74395 Mundelsheim (DE)
(74) Vertreter: Urlichs, Stefan, Dipl.-Phys.

(56) Entgegenhaltungen:
- EP-A- 0 368 501
- US-A- 4 935 921
- US-A- 5 442 647
- "Interface for the optical transport network (OTN)" ITU-T G.709 PREPUBLISHED RECOMMENDATION, Februar 2001 (2001-02), Seiten 1-80, XP002195641

## Beschreibung

Die Erfindung betrifft ein Netzelement für asynchrone optische Nachrichtensignale die gemäß einer Multiplexvorschrift für Optical Transport Networks (OTN) zusammengesetzt sind.

Die International Telecommunication Union hat in ihren neuen Empfehlungen ITU-T G.709 (Prepublished Recommendation, 02/01) Schnittstellen für ein neues Transportnetz mit der Bezeichnung OTN (Optical Transport Network) aufgestellt. Dieses neue Transportnetz dient der schnellen Übertragung digitaler optischer Signale in zukünftigen WDM Netzen (Wavelength Division Multiplexing). Im Gegensatz zu bisherigen Transportnetzen wie SDH-Netzen (Synchrone Digitale Hierarchie) und SONET (Synchronous Optical Network) arbeitet OTN mit im wesentlichen asynchronen optischen Signalen. Dies bedeutet, daß die einzelnen Nachrichtensignale nicht auf einen gemeinsamen Netztakt synchronisiert sind und innerhalb eines vorgegebene Bereiches (±20ppm) unterschiedliche Bitraten aufweisen dürfen.

Für dieses neue Transportnetz müssen nun Netzelemente entwickelt werden, die in der Lage sind die neu festgelegten Nachrichtensignale zu schalten. Diese Netzelemente sind vor allem optische Cross-Connects und Add/Drop-Multiplexer. Kern solcher Netzelemente ist eine Schaltmatrix, die Nachrichtensignale wahlfrei von jedem zu jedem Anschluß schaltet.

Da es sich bei OTN um ein optischen Transportnetz handelt, würde sich in Netzelementen die Verwendung einer rein optischen Schaltmatrix anbieten. Eine solche Matrix erlaubt es, sogenannte OTUk-Signale (Optical Channel Transport Unit, k=1, 2 oder3) durchzuschalten. Solche OTUk-Signale sind durch ihre Rahmenstruktur, Bitrate und Bandbreite charakterisiert. Derzeit verfügbare rein optische Schaltmatrizen erfordern jedoch eine Reihe optische Verstärker und Regeneratoren und sind deshalb technisch sehr aufwendig und teuer, leiden an beschränkter Kapazität und Zuverlässigkeit und haben einen hohen Platzbedarf. Zudem wird es erforderlich sein, bestimmte Information in den Transportrahmen der Nachrichtensignale auszuwerten und zu terminieren, was zwangsläufig eine elektrische Bearbeitung erfordert.

Alternativ kommt eine asynchrone elektrische Schaltmatrix in Frage, d.h. eine Schaltmatrix, die aus einer Vielzahl elektrischer Schaltkreise aufgebaut ist, welche es in einem gewissen Bandbreitenbereich erlauben elektrische Signale beliebiger Bitrate zu schalten. Solche integrierten Schaltungen werden jedoch erst entwickelt und sind derzeit noch nicht erhältlich. Die hohen Bitraten der OTN-Signale (2,67Gbit/sec, 10,71 Gbit/sec und 43,12Gbit/sec) stellen die Entwicklung solcher asynchron arbeitender integrierter Schaltungen vor große technische Probleme.

Aus der Europäischen Patentanmeldung EP 368 501 ist ein Crossconnect für Signale der Plesiochronen Digitalen Hierarchie bekannt, bei dem Signale unterschiedlicher Hierarchieebenen von einer einzigen Raum/Zeit-Schaltmatrix verschaltet werden können. Dazu werden die empfangenen Signale der unterschiedlichen Hierarchieebenen durch Stopfen an synchrone Bitraten angepasst, die untereinander in einem besonderen ganzzahligen Verhältnis stehen. Mehrere Signale unterer Hierarchieebenen werden dann zu einem internen Signal mit einer internen Bitrate gemultiplext und dann der Raum/Zeit-Schaltmatrix zugeleitet, die mit der synchronen Taktrate der höchsten Hierarchieebene arbeitet.

Aus der US 4,935,921 ist ein Crossconnect bekannt, bei dem n asynchrone digitale Signale durch Stopfen an eine gemeinsame synchrone Bitrate angepasst und m-fach parallelisiert werden. Die n parallelen synchronisierten Signale werden dann zu einem einzigen m-fach parallelen internen Signal gemultiplext, welches einer Zeitschaltstufe zugeleitet wird.

Die beiden vorgenannten Ansätze für Crossconnects sind jedoch für die Signale im optischen Transportnetz (OTN) ungeeignet.

Aufgabe der vorlegenden Erfindung ist es daher, ein Netzelement zum Schalten asynchroner optischer Nachrichtensignale anzugeben, welches mit heutigen Mitteln einfach und zuverlässig realisiert werden kann.

Die Aufgabe wird gelöst durch die Merkmale des Anspruch 1. Vorteilhafte Ausgestaltungen sind den abhängigen Ansprüchen zu entnehmen.

Vorteile der Erfindung bestehen darin, daß sie sich jahrelang erprobter ASIC Technologie bedient und daher sofort marktreif umgesetzt werden kann und daß sie ein fraktionales Schalten von Signalen höherer Bitraten ermöglicht. Es wird sogar möglich sein, bestehende Anlagen entsprechend der Erfindung für OTN aufzurüsten ohne daß eine neuartige Matrix eingebaut werden muß. Ein besonderer Vorteil besteht zudem darin, daß die Erfindung ein unterbrechungsfreies Umschalten zwischen redundanten Matrixbaugruppen ermöglicht.

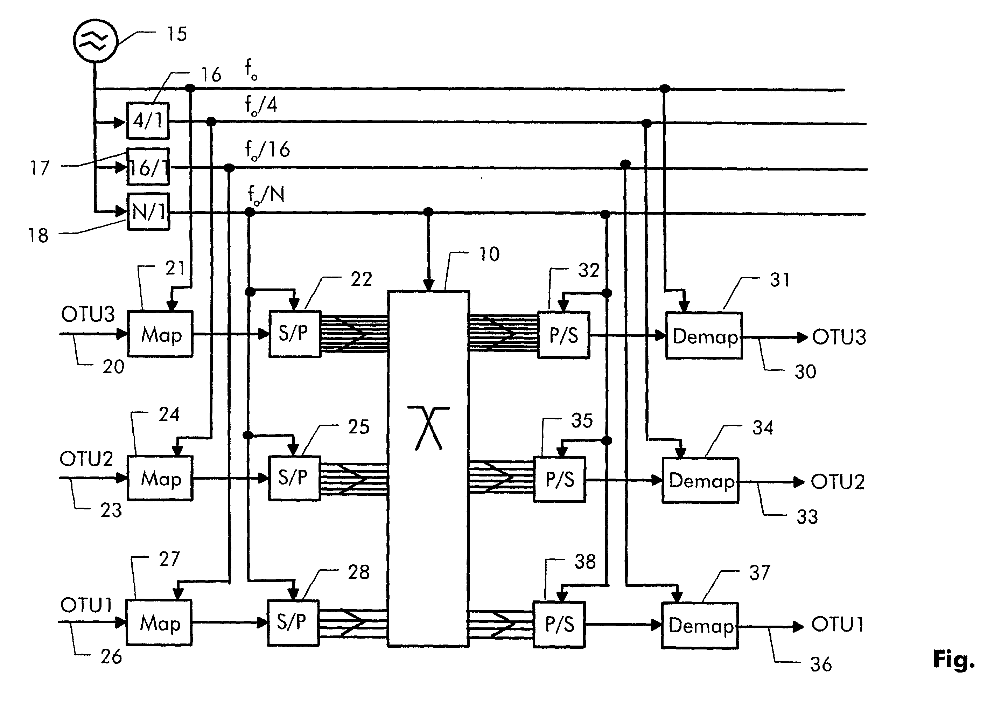

Im folgenden wird die Erfindung anhand der einzigen Figur in einem Ausführungsbeispiel erläutert. Die Figur zeigt ein Blockschaltbild eines erfindungsgemäßen Netzelementes.

Ein Grundgedanke der Erfindung besteht darin, die empfangenen asynchronen Nachrichtensignale durch Stopfen auf ein internes Rahmenformat mit geringfügig höherer interner Taktrate zu synchronisieren. Die so synchronisierten Signale werden parallelisiert und mit einer üblichen Schaltmatrix aus synchron arbeitenden integrierten Schaltungen geschaltet, die mit der internen Taktrate arbeiten.

Ein nach diesem Prinzip arbeitender optischer Cross-Connect ist in der Figur schematisch dargestellt. Die empfangenen optischen Nachrichtensignale werden von O/E-Umsetzern in elektrische Signale 20, 23, 26 umgewandelt (nicht gezeigt) und jeweils einer als Mapper bezeichneten Stopfvorrichtung 21, 24, 27 zugeleitet. Die Mapper sind jeweils mit Serien/Parallel-Umsetzern 22, 25, 28 verbunden. Über parallele Anschlüsse sind die Serien/Parallel-Umsetzern an eine synchron arbeitende elektrische Schaltmatrix 10 angeschlossen. Ausgangsseitig folgen der Schaltmatrix 10 jeweils wieder Parallel/Serien-Umsetzer 32, 35, 38, die jeweils mit einer als Demapper bezeichneten Entstopfvorrichtung 31, 34, 37 verbunden sind. Die Ausgangssignale der Demapper sind wieder asynchrone Nachrichtensignale 30, 33, 36 mit der ursprünglichen Bitrate. Die elektrischen Ausgangssignale 30, 33, 36 werden nun noch in E/O-Umsetzern wieder in optische Nachrichtensignale umgewandelt (nicht gezeigt) und ins optische Transportnetz eingespeist.

In der Figur sind beispielhaft nur jeweils ein Eingang und ein Ausgang für jede Multiplexebene (OTU1, OTU2, OTU3) gezeigt. Tatsächlich verfügt der Cross-Connect jedoch für jede der Multiplexebenen über eine Vielzahl von Ein- und Ausgängen. Die in der Figur räumlich getrennt gezeichneten Mapper und Demapper können auch paarweise auf jeweils einer I/O-Karte angeordnet sein.

Der optische Cross-Connect verfügt über ein Taktsystem mit einem Oszillator 15, dessen Ausgangstakt f₀ mehreren Teilern zugeleitet wird. Der ungeteilte Takt (entspricht Teilerverhältnis 1/1) wird dem dritten Mapper 21 und Demapper 31 zugeleitet. Ein erster Teiler 16 mit Teilerverhältnis 4/1 erzeugt ein Taktsignal f₀/4 mit einem Viertel der ursprünglichen Taktrate, das dem zweiten Mapper und Demapper 24, 34 zugeleitet wird. Ein zweiter Teiler 17 mit Teilerverhältnis 16/1 erzeugt ein Taktsignal f₀/16 mit einem Sechzehntel der ursprünglichen Taktrate, das dem ersten Mapper und Demapper 27, 37 zugeleitet wird. Ein dritter Teiler 18 mit Teilerverhältnis N/1 erzeugt ein Taktsignal f₀/N, mit dem die Serien/Parallel-Umsetzer 22, 25, 28, die Parallel/Serien-Umsetzer 32, 35, 38 und die Schaltmatrix 10 versorgt werden. N entspricht dem Sechzehnfachen des Parallelisierungsfaktors des Serien-Parallel-Umsetzers 28. Das Taktsignal f₀/N stellt die interne Taktrate zur Verfügung, mit der die Matrix arbeitet.

Für die Erfindung ist es nicht notwendigerweise, daß eine echte Taktteilung stattfinden. Vielmehr erfüllt auch ein entsprechender Lückentakt die Anforderungen. So kann ein 4:1 Teiler so ausgeführt werden, daß er nur jeden vierten Taktimpuls durchläßt und die übrigen drei Taktimpulse jeweils blockiert.

Die Funktion des optischen Cross-Connects ist die folgende. Die Frequenz des Oszillators 15 beträgt 43,02+ε GHz, wobei ε der zu wählende Wert ist, um den die interne Taktfrequenz höher ist als die maximale Bitrate der empfangenen asynchronen Signale. Das Rahmenformat und ε werden so gewählt, das die resultierende Stopfrate zwischen 0 und 1 liegt.

Der erste Mapper 27 empfängt ein Nachrichtensignal der untersten Hierarchieebene von OTN. Ein solches wird als OTU1 (Optical Channel Transport Unit) bezeichnet und hat eine nominelle Bitrate von 2,7Gbit/sec. Die Oszillatorfrequenz wird durch 16 geteilt um ein Taktsignal f₀/16 mit einer geringfügig höheren Taktrate zu erzeugen. Auf diese Taktrate wird das OTU1-Signal synchronisiert. Dazu wird ein internes proprietäres Rahmenformat aus dem OTU1-Signal gebildet, indem dieses durch Stopfen auf die Taktrate des Taktsignals f₀/16 aufgefüllt wird. Zusätzliche Bitpositionen dieses internen Rahmenformats zeigen den Rahmenanfang an und wie viele Stopfbits dem Nutzsignal angefügt sind. Das Stopfen kann bit- oder byteweise ausgeführt werden und sowohl nach dem Positiv-Null-Negativ-Stopfverfahren als auch nach dem Positiv-Stopfverfahren arbeiten. Bevorzugt ist hier Positiv-Stopfen, da dies zu geringerem Stopfjitter führt.

Die synchronisierten internen Signale werden dann mit dem Serien/Parallel-Umsetzer 28 parallelisiert und der Schaltmatrix 10 zugeführt. Im gezeigten Ausführungsbeispiel wird das synchronisierte interne Signal, das der Multiplexebene OTU1 entspricht, vierfach parallelisiert. Die interne Taktrate, mit der die integrierten Schaltungen der Schaltmatrix arbeiten beträgt somit 670MHz. Die Taktfrequenz für Schaltmatrix 10 und Serien/Parallel-Umsetzer wird erzeugt, indem die Frequenz des Oszillators durch 64 geteilt wird, d.h. in der Figur ist N=4.

Für die Multiplexebene OTU2 wird die Frequenz des Oszillators durch 4 geteilt und dem Mapper 24 zugeleitet um das empfangene OTU2-Signal darauf zu synchronisieren. Das synchronisierte Signal wird dann im Serien/Parallel-Umsetzer 25 sechzehnfach parallelisiert und der Schaltmatrix 10 über sechzehn Anschlüsse zugeleitet.

Für die Multiplexebene OTU3 wird die Frequenz des Oszillators ungeteilt dem Mapper 21 zugeleitet um das empfangene OTU3-Signal darauf zu synchronisieren. Das synchronisierte Signal wird im Serien/Parallel-Umsetzer 22 vierundsechzigfach parallelisiert und der Schaltmatrix 10 über 64 Anschlüsse zugeleitet.

Die parallelisierten internen Signale werden auf parallelen Pfaden durch die Schaltmatrix 10 geschaltet, d.h. für ein OTU1-Signal werden 4 Pfade durch die Matrix geschaltet, für ein OTU2-Signal 16 und für ein OTU3-Signal 64.

Der Oszillator 15 kann ein Oszillator mit einer Genauigkeit von ±20ppm oder weniger sein. Da die für OTN festgelegte Bandbreite ±20ppm beträgt, müßte dann im ungünstigsten Fall ein Frequenzunterschied von ±40ppm durch Stopfen ausgeglichen werden. Bei Verwendung eines entsprechend genaueren Oszillators immer noch mindestens ±20ppm. Eine Synchronisation des Oszillators auf einen externen Takt ist nicht erforderlich, kann jedoch durchgeführt werden, z.B. um alle Netzelemente eines Netzknotens auf denselben internen Takt zu synchronisieren.

Die Schaltmatrix 10 besteht aus an sich bekannten integrierten Schaltungen, die synchron mit der internen Taktrate arbeiten und schalten. Bei den integrierten Schaltungen kann es sich beispielsweise um ASICs (Application Specific Integrated Circuit) handeln, die je nach Matrixgröße zu einer quadratischen Matrix oder zu einer drei- oder mehrstufigen Clos-Matrix angeordnet sind.

Die Funktion der Demapper besteht darin, die im Mapper hinzugefügten Rahmen und Stopfbits wieder zu entfernen und die Nachrichtensignale mit ursprünglicher Bitrate wieder herzustellen. Vorzugsweise ist in den Demappern ein Taktfilter enthalten, um Stopfjitter zu filtern.

Von dem geschilderten Aufbau des Cross-Connects sind eine Vielzahl von Abänderungen möglich, von denen die folgenden nicht abschließend aufgezählt seien.
- Anstelle von allen drei in G.709 standardisierten Multiplexebenen können nur eine oder zwei Ebenen unterstützt werden. So kann z.B. ein Cross-Connect nur OTU1 oder nur OTU2 Signale oder OTU1 und OTU2 Signale jedoch keine OTU3-Signale unterstützen.
- Die Schaltmatrix kann beispielsweise mit einer internen Taktrate arbeiten, die dem Takt entspricht, auf den die OTU1-Signale synchronisiert werden. Die entsprechenden synchronisierten internen OTU1-Signale werden dann nicht mehr parallelisiert sondern nur die synchronisierten internen OTU2-und OTU3-Signale (Parallelisierungsgrad für OTU1 ist 1).
- Die Teiler können kaskadiert werden, z.B. kann anstelle eines 16:1-Teilers der durch 4 geteilte Takt erneut durch 4 geteilt werden.
- Anstelle eines geteilten Taktes kann auch ein Lückentakt erzeugt werden.

Eine bevorzugte Ausführungsform der Erfindung benutzt als internen Takt für die Schaltmatrix die aus SDH-Netzelementen wohlbekannte Taktrate von STM-1 (Synchronous Transport Module) von 155,52MHz. Die Parallelisierung ist damit für
- STM-1:: 1 Zeitschlitz
- STM-4:: 4 Zeitschlitze
- STM-16:: 16 Zeitschfitze
- STM-64:: 64 Zeifschlitze
- OTU1:: 18 Zeitschlitze
- OTU2:: 72 Zeitschlitze und für
- OTU3:: 288 Zeitschlitze.

Die oberste Frequenz, die der Oszillator erzeugt ist 288*155.520kHz=44,79GHz. Dies liegt etwa 5% über der Taktrate von OTU3. Für elektrische Verarbeitung ist diese Taktrate grenzwertig. Der Cross-Connect kann daher auch nur für OTU2 ausgelegt sein und mit einer obersten Taktrate von 72*155.520kHz=11,20GHz arbeiten.

Das Rahmenformat für OTN-Signale wird wie folgt gewählt: Die Rahmenlänge beträgt 1000 bit; andere Längen sind jedoch ebenso möglich. Ein Teil davon sind Overheadbits zuzüglich ein Stopfbit, und zwar:
Für OTU1: 47 bit Overhead + 1 Stopfbit; die nominale Stopfrate beträgt 0.61905 (min=0.58095, max=0.65714);
für OTU2: 43 bit Overhead + 1 Stopfbit, die nominale Stopfrate beträgt 0.60056 (min=0.56231, max=0.63882)
für OTU3: 39 bit Overhead + 1 Stopfbit, die nominale Stopfrate beträgt 0.54802 (min=0.50960, max=0.58643).

Von den Overheadbits werden 16 bit als Rahmenkennwort verwendet, ähnlich den A1, A2 Bytes im STM-N Rahmen bei SDH. Die restlichen Overheadbits werden für Stopfkennung sowie interne Maintenance- und Überwachungsaufgaben verwendet. Unbenutzte Overheadbits werden mit festen Stopfbits gefüllt (fixed stuff).

OTU3-Signale werden in 40 Blöcke zu je 24 Datenbits und einem Overheadbit aufgeteilt. OTU2- und OTU3-Signale sind 4 beziehungsweise 8 Blöcke davon mit je 23 Datenbits und 2 Overheadbits zu bilden. Vorteile dieser Ausgestaltung sind
- die Rahmenwiederholungsfrequenz ist hoch, wodurch Stopfjitter gut gefiltert werden kann;
- die Overhead-Bits sind gleichmäßig verteilt, wodurch nur geringer Stopfjitter entsteht; und
- es stehen intern zusätzliche Bits für Maintenance zur Verfügung.

Wird entsprechend der Erfindung ein Positiv-Null-Negativ-Stopfverfahren eingesetzt, um die empfangenen Nachrichtensignale an die interne Taktrate anzupassen, so enthält das interne Rahmenformat eine Stopfstelle, die ausnahmsweise mit einem Datenbit besetzt wird (negatives Stopfen) sowie eine Datenbitstelle, die ausnahmsweise mit einem Stopfbit besetzt wird (positives Stopfen).

Eine weitere Abänderung des erfindungsgemäßen Cross-Connects besteht darin, daß in den Mappern anstelle der OTUk-Signale die darin enthaltenen ODUk-Signale (Optical Channel Data Unit) auf entsprechend niedrigere interne Bitraten aufgestopft werden. OTUk unterscheidet sich von ODUk durch einen zusätzlichen OTUk-Overhead sowie Bits für FEC (Forward Error Correction). Diese zusätzlichen Overhead- und FEC-Bits können in den Mappern terminiert und ausgewertet werden. Die Bitraten für ODUk sind in etwa 2,50Gbit/sec für ODU1, 10,04Gbit/sec für ODU2 und 40,32Gbit/sec für ODU3.

Die Schaltmatrix des Netzelementes kann redundant ausgeführt sein, d.h. eine aktive Schaltmatrix und eine redundante Schaltmatrix für den Fehlerfall enthalten. In diesem Fall ermöglicht die Erfindung aufgrund der internen Synchronisieren ein unterbrechungsfreies Umschalten zwischen den beiden Kopien der Schaltmatrix.

## Patentansprüche

1. Netzelement für asynchrone optische Nachrichtensignale die gemäß einer Multiplexvorschrift zusammengesetzt sind und eine Bitrate innerhalb eines vorgegebenen Bitratenbereichs aufweisen, enthaltend:
- O/E-Konverter zum Umwandeln empfangener optischer Signale in elektrische Signale (20, 23, 26);
- Stopfvorrichtungen (21, 24, 27) zum Anpassen der Bitraten der elektrischen Signale (20, 23, 26) an ein ganzzahliges Vielfaches einer internen Taktrate (f₀, f₀/4, f₀/16), das höher ist als die obere Grenze des vorgegebenen Bitratenbereichs;
- Serien-Parallel-Umsetzer (22, 25, 28) zum Umwandeln der gestopften Signale in eine vorgegebene Anzahl paralleler Signale mit der internen Taktrate (f₀/N) und
- einer synchronen elektrischen Schaltmatrix (10), die mit der internen Taktrate (f₀/N) arbeitet, zum Schalten der parallelen Signale von jedem zu jedem Anschluß.

2. Netzelement nach Anspruch 1, welches als optischer Cross-Connect ausgebildet ist.

3. Netzelement nach Anspruch 1, welches für optische Nachrichtensignale gemäß ITU-T G.709 ausgebildet ist.

4. Netzelement nach Anspruch 1 mit einer zweiten redundanten Schaltmatrix, auf die im Fehlerfall der ersten Schaltmatrix unterbrechungsfrei umgeschaltet wird.

5. Netzelement nach Anspruch 1, bei dem die interne Taktfrequenz so gewählt ist, daß die Stopfrate zwischen 0 und 1 liegt.

6. Netzelement nach Anspruch 1 mit einem Taktgenerator (15) zum Erzeugen eines Taktsignals, welches ein ganzzahliges Vielfaches der internen Taktrate ist, und mit einem Teiler (18) zum Erzeugen des internen Taktsignals.

7. Netzelement nach Anspruch 6, bei dem der Taktgenerator (15) ein freilaufender Oszillator mit einer Frequenzgenauigkeit von etwa ±20ppm oder weniger ist.

8. Netzelement nach Anspruch 6, bei dem der Taktgenerator (15) extern synchronisierbar ist.

9. Netzelement nach Anspruch 6, bei dem der Teiler (15) durch Blockieren einzelner Taktimpulse des vom Taktgenerator (15) erzeugten Taktsignals einen Lückentakt mit der internen Taktrate erzeugt.

10. Netzelement nach Anspruch 6 mit einer
- ersten Stopfvorrichtungen (27) zum Anpassen der Bitraten elektrischer Signale einer unteren Hierarchieebene an ein erstes ganzzahliges Vielfaches einschließlich 1 der internen Taktrate, und
- zweiten Stopfvorrichtungen (24) zum Anpassen der Bitraten elektrischer Signale einer mittleren Hierarchieebene an ein zweites ganzzahliges Vielfaches der internen Taktrate, welches größer als das erste Vielfache ist.

11. Netzelement nach Anspruch 10, bei dem die unterste Multiplexebene der OTU1 und die mittlere Multiplexebene der OTU2 gemäß ITU-T G.709 entspricht.

12. Netzelement nach Anspruch 10 mit einer dritten Stopfvorrichtungen (21) zum Anpassen der Bitraten elektrischer Signale einer höchsten Hierarchieebene an ein drittes ganzzahliges Vielfaches der internen Taktrate, welches größer als das zweite Vielfache ist.

13. Verfahren zum Schalten asynchroner optischer Nachrichtensignale die gemäß einer Multiplexvorschrift zusammengesetzt sind und eine Bitrate innerhalb eines vorgegebenen Bitratenbereichs aufweisen, enthaltend folgende Schritte:
- Umwandeln empfangener optischer Signale in elektrische Signale (20, 23, 26);
- Anpassen der Bitraten der elektrischen Signale (20, 23, 26) durch Stopfen an ein ganzzahliges Vielfaches einer internen Taktrate (f₀, f₀/4, f₀/16), das höher ist als die obere Grenze des vorgegebenen Bitratenbereichs;
- Serien-Parallel-Umwandeln der gestopften Signale in eine vorgegebene Anzahl paralleler Signale mit der internen Taktrate (f₀/N) und
- Schalten der parallelen Signale mit einer synchronen elektrischen Schaltmatrix (10), die mit der internen Taktrate arbeitet (f₀/N), von jedem zu jedem Anschluß.

## Claims

1. Network element for asynchronous optical information signals, which are composed according to a multiplex specification and have a bit rate within a predefined bit rate range, containing:
- Optoelectric converters for converting received optical signals into electrical signals (20, 23, 26);
- Stuffing devices (21, 24, 27) for adapting the bit rates of the electric signals (20, 23, 26) to an integer multiple of an internal clock rate (f₀, f₀/4, f₀/16), which is higher than the upper limit of the predefined bit rate range;
- serial/parallel converters (22, 25, 28) for converting the stuffed signals into a predefined number of parallel signals with the internal clock rate (f₀/N) and
- a synchronous electric switching matrix (10), which works with the internal clock rate (f₀/N), for switching the parallel signals from any port to any other.

2. Network element according to Claim 1, which is developed as an optical cross-connect.

3. Network element according to Claim 1, which is developed for optical information signals in accordance with ITU-T G.709.

4. Network element according to Claim 1, with a second redundant switching matrix to which control is switched without interruption in the event of a fault with the first switching matrix.

5. Network element according to Claim 1, in which the internal clock frequency is selected such that the stuffing rate is between 0 and 1.

6. Network element according to Claim 1, with a clock generator (15) for generating a clock signal, which is an integer multiple of the internal clock rate, and with a divider (18) for generating the internal clock signal.

7. Network element according to Claim 6, in which the clock generator (15) is a free-running oscillator with a frequency accuracy of about ±20ppm or less.

8. Network element according to Claim 6, in which the clock generator (15) can be synchronized externally.

9. Network element according to Claim 6, in which the divider (15), by blocking individual clock pulses of the clock signal generated by the clock generator (15), generates a gapped clock with the internal clock rate.

10. Network element according to Claim 6 with a
- first stuffing device (27) for adapting the bit rates of electric signals of a lower hierarchy level to a first integer multiple including 1 of the internal clock rate, and
- second stuffing device (24) for adapting the bit rates of electric signals of a medium hierarchy level to a second integer multiple of the internal clock rate, said multiple being higher than the first multiple.

11. Network element according to Claim 10, in which the lowest multiplex level corresponds to OTU1 and the medium multiplex level to OTU2 as in ITU-T G.709.

12. Network element according to Claim 10 with a third stuffing device (21) for adapting the bit rates of electric signals of a highest hierarchy level to a third integer multiple of the internal clock rate, said multiple being higher than the second multiple.

13. Method for switching asynchronous optical information signals, which are composed according to a multiplex specification and have a bit rate within a predefined bit rate range, containing the following steps:
- Conversion of received optical signals into electrical signals (20, 23, 26);
- Adaptation of the bit rates of the electric signals (20, 23, 26) by stuffing to an integer multiple of an internal clock rate (f₀, f₀/4, f₀/16), which is higher than the upper limit of the predefined bit rate range;
- Serial/parallel conversion of the stuffed signals into a predefined number of parallel signals with the internal clock rate (f₀/N) and
- Switching of the parallel signals with a synchronous electric switching matrix (10), which works with the internal clock rate (f₀/N), from any port to any other.

## Revendications

1. Elément de réseau pour des signaux de télécommunications optiques asynchrones qui sont assemblés selon une instruction de multiplexage et qui comprennent un débit à l'intérieur d'un domaine de débit prédéterminé, comprenant :
- des convertisseurs O/E pour convertir des signaux optiques reçus en signaux électriques (20, 23, 26) ;
- des dispositifs de remplissage (21, 24, 27) pour adapter les débits des signaux électriques (20, 23, 26) à un multiple entier d'une fréquence d'horloge interne (f₀, f₀/4, f₀/16) supérieur à la limite supérieure du domaine de débit prédéterminé ;
- des convertisseurs série-parallèle (22, 25, 28) pour convertir les signaux remplis en un nombre prédéterminé de signaux parallèles avec la fréquence d'horloge interne (f₀/N) ; et
- une matrice de commutation électrique synchrone (10) qui fonctionne avec la fréquence d'horloge interne (f₀/N) pour commuter les signaux parallèles d'un raccordement à l'autre.

2. Elément de réseau selon la revendication 1, qui est conçu comme un répartiteur optique.

3. Elément de réseau selon la revendication 1 qui est conçu pour des signaux de télécommunications optiques selon ITU-T G.709.

4. Elément de réseau selon la revendication 1 avec une deuxième matrice de commutation redondante sur laquelle on passe sans interruption dans le cas d'une défaillance de la première matrice de commutation.

5. Elément de réseau selon la revendication 1 dans lequel la fréquence d'horloge interne est choisis de telle sorte que le taux de remplissage est entre 0 et 1.

6. Elément de réseau selon la revendication 1 avec un générateur d'impulsions (15) pour générer un signal d'horloge qui est un multiple de la fréquence d'horloge interne et avec un diviseur (18) pour générer le signal d'horloge interne.

7. Elément de réseau selon la revendication 6 dans lequel le générateur d'impulsions (15) est un oscillateur libre avec une précision de fréquence d'environ ± 20 ppm ou inférieure.

8. Elément de réseau selon la revendication 6, dans lequel le générateur d'impulsions (15) peut être synchronisé de l'extérieur.

9. Elément de réseau selon la revendication 6, dans lequel le diviseur (15) génère une fréquence de remplissage avec la fréquence d'horloge interne à l'aide du blocage de différentes impulsions du signal d'horloge généré par le générateur d'impulsions (15).

10. Elément de réseau selon la revendication 6 avec
- un premier dispositif de remplissage (27) pour adapter les débits des signaux électriques d'un niveau de hiérarchie inférieur à un premier multiple entier, y compris 1, de la fréquence d'horloge interne, et
- un deuxième dispositif de remplissage (24) pour adapter les débits des signaux électriques d'un niveau de hiérarchie moyen à un deuxième multiple entier de la fréquence d'horloge interne qui est supérieure au premier multiple.

11. Elément de réseau selon la revendication 10 dans lequel le niveau de multiplexage le plus bas de OTU1 et le niveau de multiplexage moyen de OTU2 correspondent à la norme ITU-T G.709.

12. Elément de réseau selon la revendication 10 avec un troisième dispositif de remplissage (21) pour adapter les débits des signaux électriques d'une niveau de hiérarchie le plus haut à un troisième multiple entier de la fréquence d'horloge interne, qui est supérieur au deuxième multiple.

13. Procédé de commutation de signaux de télécommunications optiques asynchrones assemblés selon une instruction de multiplexage et qui présentent un débit à l'intérieur d'un domaine de débit prédéterminé, comprenant les étapes suivantes :
- conversion des signaux optiques reçus en signaux électriques (20, 23, 26) ;
- adaptation des débits des signaux électriques (20, 23, 26) par remplissage à un multiple entier de la fréquence d'horloge interne (f₀, f₀/4, f₀/16), qui est supérieur à la limite supérieure du domaine de débit prédéterminé ;
- conversion série-parallèle des signaux remplis en un nombre prédéterminé de signaux parallèles avec la fréquence d'horloge interne (f₀/N) et
- Commutation les signaux parallèles avec une matrice de commutation électrique synchrone (10), qui fonctionne avec la fréquence d'horloge interne (f₀/N), d'un raccordement à l'autre.
